# DEMANDE DE BREVET EUROPEEN

(11) **EP 0 678 804 A1**
(43) Date de publication de la demande: **25.10.1995**
(21) Numéro de dépôt: 95400851.2
(22) Date de dépôt: 14.04.1995
(51) Int. Cl.: G06F 1/32, H04B 1/16

(54) **Dispositif d'économie d'énergie dans un terminal de communication portatif**

(30) Priorité: 19.04.1994 FR 9404652
(71) Demandeur: ALCATEL MOBILE COMMUNICATION FRANCE, 75008 Paris (FR)
(72) Inventeur: Nussli, Christophe, F-75014 Paris (FR); Beaudou, Patrice, F-75017 Paris (FR)
(74) Mandataire: Pothet, Jean Rémy Emile Ludovic

(57) **Abrégé**

Dispositif d'économie d'énergie dans un radiotéléphone mobile comportant un microprocesseur (10) et au moins une mémoire d'instructions (12) externe au microprocesseur comportant: un moyen de commande (14, 16, 20, 22, 26) ayant son entrée connectée à la sortie (RDB) de lecture de mémoire du microprocesseur délivrant un signal périodique, et un moyen de commutation (18) ayant deux entrées et une sortie connectée à l'entrée de sélection (CSB) de la mémoire, la première entrée étant connectée à la sortie de sélection (CS₁) de la mémoire du microprocesseur et la deuxième entrée étant connectée à la sortie du moyen de commande, le moyen de commutation fournissant un signal de désactivation sur sa sortie lorsque le signal (RDB) délivré par la sortie de lecture de mémoire du microprocesseur cesse d'être périodique lorsque ledit microprocesseur est en état de veille, quand le terminal n'est plus en communication avec un autre terminal, de sorte que la mémoire n'est plus activée malgré le maintien de la demande de sélection par le microprocesseur.

## Description

La présente invention concerne de façon générale les économies d'énergie dans les terminaux de communication portatifs et en particulier un dispositif d'économie d'énergie par inhibition de la sélection des mémoires externes d'un terminal de communication portatif.

Les terminaux de communication portatifs tels que les radiotéléphones mobiles du type GSM comportent une batterie d'alimentation qui leur confère leur autonomie.

Les intervalles de temps pendant lesquels un terminal portatif est occupé à communiquer avec un autre terminal représentent très peu de temps par rapport aux intervalles sans communication. C'est pourquoi, on évite généralement de laisser actifs les circuits du terminal (mais ils restent alimentés) lorsque ce dernier n'est plus en communication, de façon à économiser l'énergie et maintenir la batterie opérationnelle le plus longtemps possible.

De nombreux systèmes existent déjà dans la technique antérieure pour économiser l'énergie fournie par la batterie. Ainsi le brevet européen EP 255.048 décrit un radiotéléphone portatif qui dispose d'un moyen lui permettant d'apprécier s'il se trouve ou non dans la zone de service du réseau et d'interrompre l'alimentation de la batterie s'il juge qu'il se trouve en dehors de la zone de service.

Dans la demande de brevet PCT WO 93.25955, un terminal portable comprend un processeur pilote chargé des fonctions de commande et de surveillance et un microprocesseur chargé des opérations de traitement de données. Lors de la survenance d'un événement nécessitant des opérations de traitement de données, le microprocesseur est activé, exécute les opérations nécessaires et est immédiatement désactivé par le processeur pilote pour économiser l'énergie lorsqu'il n'est pas activement engagé dans des fonctions de traitement de données.

Actuellement, les microprocesseurs du type CMOS dits "statiques" (c'est à dire supportant une coupure d'horloge) possèdent une instruction spécifique dite de "mise en veille" (powerdown) qui inhibe l'entrée d'horloge et arrête donc toute activité dans la puce. Le cristal fournissant le signal d'horloge étant généralement connecté sur le microprocesseur, l'inhibition de l'entrée d'horloge bloque évidemment la sortie et le signal d'horloge s'éteint. Le système, toujours alimenté par sa batterie (en général 5 volts) est en mode d'économie maximale, consommant parfois moins de 50 µA qui représente la somme des courants de fuite des cellules CMOS, valeur nettement inférieure à la consommation en mode actif qui peut atteindre 50 mA. Comme il a été mentionné précédemment, le mode de "mise en veille" du microprocesseur est prépondérant dans le cas d'un radiotéléphone portatif.

La mise en veille du microprocesseur est une instruction que ce dernier va chercher en mémoire externe, RAM ou ROM. Comme cette instruction est une demande d'arrêt du système, c'est la dernière qu'il exécutera avant de passer à l'état de veille. Mais, de ce fait, la mémoire qui contient l'instruction de mise en veille reste sélectionnée puisqu'il n'est plus possible d'exécuter, après cette instruction, une autre instruction qui aurait pour but de désactiver la mémoire. On ne peut évidemment pas exécuter une telle instruction avant l'instruction de mise en veille puisque la mémoire ne serait plus accessible pour l'instruction suivante. Or, une mémoire dont la ligne de sélection ("chip select") est activée, consomme encore quelques mA, ce qui est certes moins important qu'en mode actif mais reste tout de même pénalisant pour un terminal autonome. En outre, même si on arrivait à désactiver la sélection de la mémoire, il serait impossible de la sélectionner à nouveau lors de la sortie de veille généralement sur interruption, puisqu'on ne peut pas exécuter les instructions qui se trouvent dans la mémoire que l'on désire sélectionner.

C'est pourquoi le but principal de l'invention est de réaliser un dispositif permettant d'économiser l'énergie en inhibant la ligne de sélection des mémoires contenant les instructions, après que le microprocesseur a été placé en état de veille.

L'objet de l'invention est donc un dispositif d'économie d'énergie intégré dans un terminal de communication portatif du type radiotéléphone mobile comprenant un microprocesseur et au moins une mémoire d'instructions externe au microprocesseur, ce dernier étant mis en état de veille lorsque le terminal n'est plus en communication. Le dispositif comprend un moyen de commande disposant d'une entrée et d'une sortie de commande, l'entrée étant connectée à la sortie de lecture de mémoire du microprocesseur qui délivre un signal périodique tant que le microprocesseur est actif ; et un moyen de commutation comportant deux entrées et une sortie connectée à l'entrée de sélection de la mémoire, dont la première entrée est connectée à la ligne de sélection de mémoire du microprocesseur et la deuxième entrée est connectée à la sortie de commande du moyen de commande, le moyen de commutation fournissant un signal de désactivation sur sa sortie lorsque le signal délivré par la sortie de lecture de mémoire du microprocesseur cesse d'être périodique lorsque le microprocesseur est en état de veille, de sorte que la mémoire n'est plus activée malgré le maintien de la sortie de sélection de mémoire dans son état actif.

Les buts, objets et caractéristiques de la présente invention ressortiront mieux de la description qui suit faite en référence aux dessins dans lesquels :
la figure 1 représente un schéma synoptique d'un premier mode de réalisation selon l'invention,
la figure 2 représente les diagrammes en fonction du temps des principaux signaux présents dans le dispositif représenté sur la figure 1, et
la figure 3 représente un schéma synoptique d'un deuxième mode de réalisation selon l'invention.

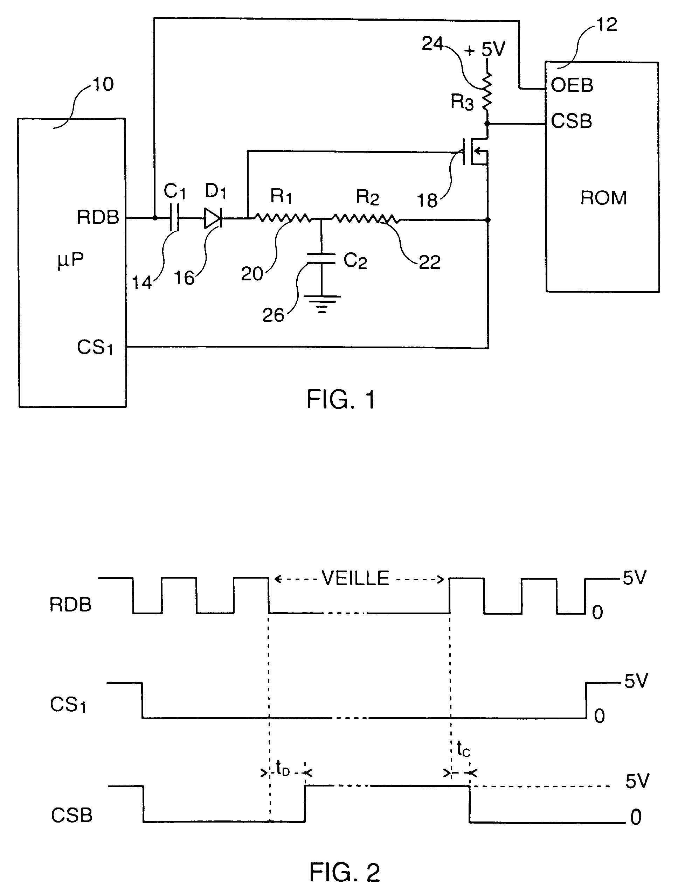

Comme représenté sur la figure 1, le microprocesseur 10 dispose d'une ligne de sortie RDB correspondant au signal de lecture des mémoires telles que la mémoire ROM 12 contenant les instructions du programme d'exécution. Ce signal RDB est un signal périodique illustré par le premier diagramme de la figure 2.

Le signal RDB est connecté d'une part à l'entrée de lecture OEB de la mémoire ROM 12 et d'autre part au dispositif faisant l'objet de l'invention au moyen du condensateur C₁ 14 d'une valeur d'environ 1nF. Le condensateur C₁ est connecté à l'entrée d'une diode D₁ 16 dont la sortie est reliée à la grille d'un transistor à effet de champ 18. En outre, la sortie de la diode 16 est connectée par les résistances en série R₁ 20 et R₂ 22 à la source du transistor 18 dont le drain est connecté à une tension fixe de + 5 volts par l'intermédiaire d'une résistance R₃ 24. Le point d'interconnexion entre les résistances 20 et 22 est relié à la masse par l'intermédiaire d'un condensateur C₂ 26.

La source du transistor est connectée à la ligne CS₁ de sélection de mémoire provenant du microprocesseur 10 alors que son drain est connecté à l'entrée CSB de sélection de la mémoire 12. On doit noter qu'en l'absence du dispositif selon l'invention, la ligne CS₁ serait directement connectée à l'entrée de sélection CSB de la mémoire. Il existe bien sûr autant de lignes de sélection de mémoire CS₁, CS₂, ... qu'il y a de mémoires à sélectionner, qu'elles soient du type ROM ou du type RAM, et autant de montages identiques à celui de la figure 1.

Lorsque le microprocesseur 10 est actif, c'est à dire que le signal RDB est un signal périodique en créneaux tel que représenté sur la figure 2, le condensateur 14 ne présente qu'une impédance négligeable pour le signal. En outre, à chaque créneau, la diode 16 est passante et le condensateur C₂ 26 se charge avec une constante de temps t₁ = R₁C₂. Si on choisit R₁ de faible valeur (par exemple 1 Kohm), on aura une constante de temps bien inférieure à la période du signal périodique RDB, c'est à dire que le condensateur se chargera très rapidement. Par contre, en supposant que la résistance R₂ 22 soit de grande valeur (par exemple 1 Mohm) de manière à ce que la constante de temps t₂ = R₂C₂ soit bien supérieure à la période du signal RDB, le condensateur C₂ n'aura pas le temps de se décharger entre deux créneaux dudit signal par la sortie CS₁ du microprocesseur si celle-ci est à 0 volt.

On voit donc que la sortie de la diode 16 connectée à la résistance 20 se maintient à un potentiel haut de 5 volts qui est donc appliqué à la grille du transistor 18. Par conséquent, le transistor 18 est passant à condition que sa source soit au potentiel 0 en étant connectée à la ligne CS₁ basse. On notera ici que la demande de sélection d'une mémoire se fait en appliquant un niveau bas (0 v) sur son entrée CS (chip select), comme illustré sur la figure 2.

Le transistor 18 étant passant, il y a chute de tension dans la résistance R₃ 24 par l'écoulement de courant entre le drain et la source. La base du drain connectée à l'entrée de sélection CSB de la mémoire est donc maintenue basse (0 volt) comme illustré sur la figure 2.

Lorsque le microprocesseur passe à l'état de veille, sa ligne de lecture de mémoire (CS₁) passe alors à un niveau bas comme illustré sur la figure 2. Du fait que RDB a une valeur constante (ici, 0 volt), la diode 16 se bloque et sa sortie reste au potentiel de 5 volts. Malgré la constante de temps t₂ = R₂C₂ élevée, le condensateur se décharge vers la borne CS₁ en un temps t_{D}. Lorsque cette décharge du condensateur 26 a dépassé un certain seuil, la tension de grille du transistor 18 qui suit la même évolution que la charge du condensateur 26, repasse au-dessous du seuil qui entraîne la commutation du transistor 18 qui se bloque. Par conséquent, aucun courant ne passe dans la résistance R₃ 24 et la base du drain connectée à CSB passe à 5 volts comme illustré sur la troisième courbe de la figure 2.

On voit donc que, lorsque la microprocesseur 10 passe à l'état de veille, l'entrée de sélection CSB passe au bout d'un court laps de temps t_{D}, au niveau haut de désactivation, c'est à dire que la mémoire ROM ne consomme plus d'énergie.

Lorsque le microprocesseur est de nouveau "réveillé", le signal RDB redevient périodique, ce qui a pour effet de rendre de nouveau passant le transistor 18 et donc de ramener l'entrée de mémoire CSB au niveau bas (activation) au bout d'un temps t_{C} correspondant à la constante de temps t₁ du couple R₁C₂.

Bien que le signal RDB ait été représenté à un niveau bas lorsque le microprocesseur se met en état de veille, on peut envisager le cas inverse où le signal RDB se maintient à 5 volts lorsque le microprocesseur est à l'état de veille. Ceci ne provoque aucun changement dans le comportement du signal CSB puisque le condensateur C₁ bloque tout passage de courant dans la diode D₁ 16. Par conséquent, de la même façon que précédemment, le signal CSB passe à un niveau haut, donc à l'état de désactivation.

Le mode de réalisation illustré par les figures 1 et 2 est adapté lorsque le système comporte plusieurs mémoires ROM (ou RAM) contenant les instructions. Ce cas se présente principalement lorsque le logiciel qui s'exécute sur le microprocesseur est amené à faire de la pagination c'est à dire à gérer l'adressage physique des mémoires (nécessitant l'activation du signal de sélection CS₁, CS₂, ...) par le logiciel.

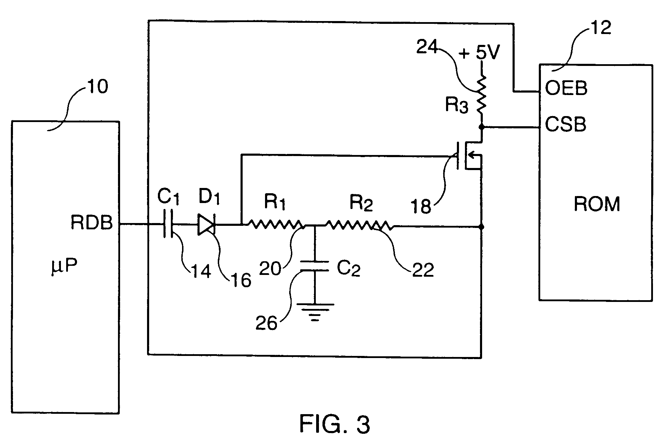

Mais, il existe un cas particulier dans lequel le système ne comporte qu'une seule mémoire ROM. Ce mode de réalisation particulier est illustré sur la figure 3.

La différence essentielle avec le mode de réalisation illustré sur la figure 1 est que la source du transistor FET 18 est connectée à la sortie RDB du microprocesseur. De la même façon que précédemment, lorsque le signal RDB se stabilise à 0 ou à 5 volts, le transistor 18 se bloque du fait que, soit le condensateur C₂ 26 se décharge vers le potentiel 0 de RDB et dans ce cas la grille du transistor passe au potentiel 0 au bout d'un intervalle de temps t_{D}, soit la source du transistor est à 5 volts, c'est à dire au même potentiel que sa grille. Par conséquent dans les deux cas, l'entrée de sélection CSB de la mémoire se stabilise au potentiel de 5 volts correspondant à la désactivation de la mémoire ROM 12.

On doit noter que dans le mode de réalisation illustré sur la figure 2, le condensateur C₁ 14 n'est pas nécessaire. En effet, dans le mode de réalisation de la figure 1, le signal RDB se stabilisant à + 5 volts en état de veille, le condensateur C₁ était utile pour empêcher que le signal RDB maintienne la grille du transistor 18 à + 5 volts. Dans le mode de réalisation de la figure 2, ceci n'a plus lieu d'être dans la mesure où le condensateur est bloqué lorsque le signal RDB est stable à + 5 volts, du seul fait que sa source est également à + 5 volts.

## Revendications

1. Dispositif d'économie d'énergie dans un terminal de communication portatif comportant un microprocesseur (10) et au moins une mémoire d'instructions (12) externe au microprocesseur, le microprocesseur étant mis en état de veille lorsque le terminal n'est plus en communication avec un autre terminal ; ledit dispositif étant caractérisé en ce qu'il comprend :
un moyen de commande (14, 16, 20, 22, 26) disposant d'une entrée et d'une sortie de commande, ladite entrée étant connectée à la sortie de lecture RDB de mémoire dudit microprocesseur qui délivre un signal périodique et,
un moyen de commutation (18) comportant deux entrées et une sortie connectée à l'entrée de sélection (CSB) de ladite mémoire, dont la première entrée est connectée à la sortie de sélection (CS₁) de mémoire dudit microprocesseur et la deuxième entrée est connectée à ladite sortie de commande du moyen de commande, ledit moyen de commutation fournissant un signal de désactivation sur sa sortie lorsque le signal (RDB) délivré par ladite sortie de lecture de mémoire dudit microprocesseur cesse d'être périodique lorsque ledit microprocesseur est en état de veille, de sorte que ladite mémoire n'est plus activée malgré le maintien de la ligne de sélection dans son état actif.

2. Dispositif selon la revendication 1, dans lequel ledit moyen de commutation (18) est un transistor FET dont la grille est connectée à ladite sortie de commande du moyen de commande, la source est connectée à ladite ligne de sélection (CS₁) de ladite mémoire (12) et la sortie est connectée d'une part à ladite entrée de sélection (CSB) de ladite mémoire et d'autre part à un potentiel haut (+ 5 volts) par l'intermédiaire d'une résistance (24), de manière à ce que ledit transistor soit passant et son drain porté à un potentiel bas (0 volt) tant que le signal RDB est périodique indiquant que ledit microprocesseur est actif, et à ce que ledit transistor soit bloqué et son drain porté à un potentiel haut (+ 5 volts) lorsque le signal RDB se stabilise à une valeur fixe (0 ou 5 volts) indiquant que ledit microprocesseur est à l'état de veille.

3. Dispositif selon la revendication 2, dans lequel ledit moyen de commande comprend :
un premier condensateur (14) connecté à ladite sortie de lecture de mémoire (RDB) dudit microprocesseur,
une diode (16) connectée à la sortie dudit condensateur,
une première (20) et une seconde (22) résistances en série connectées entre la sortie de ladite diode et la source dudit transistor FET (18), ladite seconde résistance ayant une valeur beaucoup plus élevée que ladite première résistance, et
un second condensateur (26) connecté entre le point d'interconnexion desdites première et seconde résistance et la masse, de manière à ce que ledit second condensateur se charge rapidement à chaque montée dudit signal (RDB) lorsque celui-ci est périodique, et se décharge lentement lorsque ledit signal cesse d'être périodique parce que ledit microprocesseur est en état de veille.

4. Dispositif selon la revendication 1, 2 ou 3, dans un terminal de communication portatif ne comprenant qu'une seule mémoire d'instructions (12), et dans lequel ladite première entrée dudit moyen de commutation (18) est connectée à la sortie de lecture de mémoire (RDB) dudit microprocesseur (10).

5. terminal radiotéléphone mobile du type GSM comprenant un dispositif d'économie d'énergie selon l'une quelconque des revendications 1 à 4.
